(19) Europäisches Patentamt / European Patent Office / Office européen des brevets

(11) **EP 4 723 204 A1**

(12) **EUROPEAN PATENT APPLICATION**
published in accordance with Art. 153(4) EPC

(43) Date of publication:
**08.04.2026 Bulletin 2026/15**

(21) Application number: 24908176.1

(22) Date of filing: **20.12.2024**

(51) International Patent Classification (IPC):
$H01M\ 4/134^{(2010.01)}$    $H01M\ 4/133^{(2010.01)}$
$H01M\ 4/36^{(2006.01)}$    $H01M\ 4/587^{(2010.01)}$
$H01M\ 4/583^{(2010.01)}$    $H01M\ 4/1395^{(2010.01)}$
$H01M\ 4/1393^{(2010.01)}$    $H01M\ 10/052^{(2010.01)}$
$H01M\ 4/02^{(2006.01)}$

(52) Cooperative Patent Classification (CPC):
H01M 4/02; H01M 4/133; H01M 4/134;
H01M 4/1393; H01M 4/1395; H01M 4/36;
H01M 4/583; H01M 4/587; H01M 10/052;
Y02E 60/10

(86) International application number:
**PCT/KR2024/020851**

(87) International publication number:
**WO 2025/135894 (26.06.2025 Gazette 2025/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.12.2023 KR 20230190455**

(71) Applicant: **LG Energy Solution, Ltd.**
**Seoul 07335 (KR)**

(72) Inventors:
• **JO, Mi Ru**
**Daejeon 34122 (KR)**
• **OH, Il Geun**
**Daejeon 34122 (KR)**

(74) Representative: **Plasseraud IP**
**104 Rue de Richelieu**
**CS92104**
**75080 Paris Cedex 02 (FR)**

(54) **NEGATIVE ELECTRODE, METHOD FOR PREPARING SAME, AND LITHIUM SECONDARY BATTERY COMPRISING SAME**

(57) The present invention relates to a negative electrode having excellent rapid charging performance and swelling properties and a method for manufacturing the same, and the negative electrode of the present invention includes a negative electrode mixture layer including a Si-based negative electrode active material and a carbon-based negative electrode active material, wherein the surface of the negative electrode mixture layer has a 85° gloss of 14 to 25 in a fully-discharged state after activation.

FIG.1

**EP 4 723 204 A1**

**Description**

**TECHNICAL FIELD**

This application claims the benefit of Korean Patent Application No. 10-2023-0190455, filed on December 22, 2023, in the Korean Intellectual Property Office, the disclosure of which is incorporated herein in its entirety by reference.

The present invention relates to a negative electrode for a lithium secondary battery and a method for manufacturing the same, and more specifically, to a negative electrode having excellent rapid charging performance and swelling properties and a method for manufacturing the same.

**BACKGROUND ART**

A lithium secondary battery is generally composed of a positive electrode, a negative electrode, a separator, and an electrolyte, and the positive electrode and the negative electrode include active materials capable of intercalation and de-intercalation of lithium ions.

An electrode of the lithium secondary battery is manufactured by applying an electrode slurry including an electrode active material, a conductive material, and a binder on an electrode current collector, drying the electrode slurry, and then performing roll-pressing and vacuum-drying until the electrode has a desired thickness.

Recently, as the demand for electric vehicles increases, there is an increasing demand for batteries having high energy density and excellent rapid charging performance. Accordingly, there have been attempts actively made to apply a Si-based negative electrode active material, which has a large theoretical capacity, and reacts fast with lithium ions, thereby having excellent rapid charging performance, as a negative electrode active material. However, since the Si-based negative electrode active material changes significantly in volume due to charge/discharge, the thickness of a negative electrode significantly changes after activation, and lifespan properties are degraded.

A typical negative electrode using a carbon-based negative electrode active material has been designed in consideration of changes in volume of the electrode before and after activation, but if a negative electrode to which a Si-based negative electrode active material is applied is manufactured in the same manner, the thickness of the negative electrode significantly increases after activation, so that there is a problem in that it is difficult to implement a desired cell thickness. If a roll-pressing rate is increased in consideration of an increase in the thickness of a negative electrode after an activation process, due to excessive roll-pressing, cracks may occur in a negative electrode active material, or pores on the surface of the electrode may be closed, so that there are problems of high-temperature side reactions and deterioration in rapid charging performance.

**DISCLOSURE OF THE INVENTION**

**TECHNICAL PROBLEM**

In order to solve the above-described problems, the present invention is to provide a negative electrode which is manufactured by including a Si-based negative electrode active material as a negative electrode active material, while satisfying a specific range of 85° gloss of the surface of the negative electrode after activation, and thus, is capable of suppressing active material damage and electrode surface pore clogging due to swelling and excessive roll-pressing after the activation, and a method for manufacturing the negative electrode.

In addition, the present invention is to provide a lithium secondary battery which includes the above-described negative electrode, and thus, is excellent in rapid charging performance and swelling properties.

**TECHNICAL SOLUTION**

According to an embodiment, the present invention provides a negative electrode including a negative electrode mixture layer which includes a Si-based negative electrode active material and a carbon-based negative electrode active material, wherein the surface of the negative electrode has a 85° gloss of 14 to 25, preferably 14 to 20, and more preferably 15 to 20 in a fully-discharged state after activation.

The Si-based negative electrode active material may include $SiO_x$ (wherein, $0<x<2$), a Si-C composite, or a combination thereof, and particularly, may preferably be a SiC composite.

The carbon-based negative electrode active material may include artificial graphite, natural graphite, or a combination thereof, and may preferably be a mixture of artificial graphite and natural graphite.

The Si-based negative electrode active material and the carbon-based negative electrode active material may be included at a weight ratio of 1 : 99 to 20 : 80, preferably 3 : 97 to 20 : 80, and more preferably 3 : 97 to 15 : 85.

Meanwhile, in the negative electrode, the surface of the negative electrode may have a 60° gloss of 0.1 to 4.0, preferably 0.5 to 4.0, and more preferably 1.0 to 4.0, in a fully-discharged state after activation.

The negative electrode may have a degree of curvature of 2 or less, preferably 1 to 2, and more preferably 1.2 to 2.0, as defined by Equation (1) below.

$$\text{Equation (1): Degree of curvature } (\tau) = L_e / L_0$$

In Equation (1) above, $L_0$ is the thickness of the negative electrode mixture layer, and $L_e$ is the average travel distance of lithium ions inside the negative electrode mixture layer.

The negative electrode may have negative electrode adhesive force of 40 gf/20 mm or greater, preferably 40 gf/20 mm to 70 gf/20 mm, and more preferably 45 gf/20 mm to 70 gf/20 mm, as measured by a 90 degree peel test.

According to another embodiment, the present invention provides a method for manufacturing a negative electrode, the method including coating a negative electrode slurry including a silicon-based negative electrode active material and a carbon-based negative electrode active material on a negative electrode current collector, roll-pressing a negative electrode coated with the negative electrode slurry such that the surface of the negative electrode has a 85° gloss of 14 to 25, preferably 14 to 20, and more preferably 15 to 20, in a fully-discharged state after activation, and vacuum-drying the roll-pressed negative electrode to form a negative electrode mixture layer.

The roll-pressing may be performed such that a roll-pressing rate as defined by Equation (2) below is to be 25% to 40%, preferably 25% to 35%.

Roll-pressing rate (%) = {(thickness of negative electrode mixture layer before roll-pressing - thickness of negative electrode mixture layer after roll-pressing) / thickness of negative electrode mixture    Equation (2): layer before roll-pressing}×100

The roll-pressing may be performed such that after the roll-pressing, the negative electrode mixture layer has a porosity of 30% to 40%, preferably 30% to 35%.

Meanwhile, after the vacuum-drying, the surface of the negative electrode mixture layer may have a 85° gloss of 14 to 20, preferably 14 to 18, and more preferably 14 to 17, and after the vacuum-drying, the surface of the negative electrode mixture layer may have a 60° gloss of 1 to 5, preferably 2 to 5, and more preferably 2.5 to 5.

According to yet another embodiment, the present invention provides a lithium secondary battery including the negative electrode according to the present invention described above, a positive electrode, and an electrolyte.

## ADVANTAGEOUS EFFECTS

A negative electrode according to the present invention is manufactured such that a 85° gloss of the surface of a negative electrode mixture layer satisfies a specific range after activation, so that although the negative electrode includes a Si-based negative electrode active material, the volume of which changes significantly during charging and discharging, as a negative electrode active material, it is possible to form the cell thickness of a lithium secondary battery within a desired range due to low swelling after activation, and it is possible to effectively prevent a conductive network from being destroyed by a change in negative electrode thickness, resulting in deteriorating the negative electrode.

In addition, if the negative electrode is manufactured such that the 85° gloss of the surface of the negative electrode mixture layer after activation satisfies the scope of the present invention, active material damage due to excessive roll-pressing and electrode surface pore clogging are suppressed, so that side reactions with an electrolyte are reduced and rapid charging performance is improved.

In addition, the negative electrode according to the present invention suppresses the de-intercalation of the negative electrode mixture layer during charging and discharging, and thus, may suppress deterioration in lifespan due to negative electrode de-intercalation.

In addition, the negative electrode according to the present invention includes a Si-based negative electrode active material having a large capacity as a negative electrode active material, and thus, may implement a high capacity.

Therefore, if the negative electrode according to the present invention is applied to a lithium secondary battery, high energy density, excellent lifespan properties, and rapid charging performance may be implemented.

## BRIEF DESCRIPTION OF THE DRAWINGS

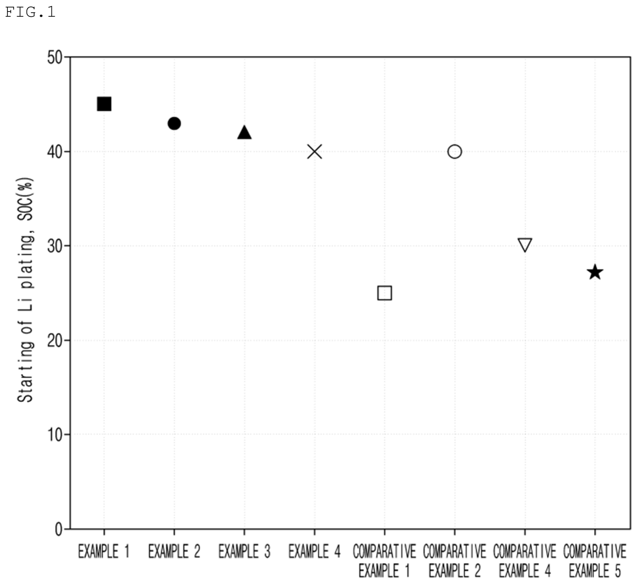

FIG. 1 is a graph showing the result of a rapid charging performance test of a coin half-cell to which a negative electrode manufactured by each of Examples and Comparative Examples is applied.

**BEST MDOE FOR CARRYING OUT THE INVENTION**

Hereinafter, the present invention will be described in more detail.

In the present invention, "gloss" is a value obtained by quantifying the amount of light specularly reflected when the surface of an object to be measured is irradiated with light at a specific incident angle, and may be measured using a gloss meter such as Micro-Tri-Gloss (AG4563) of BYK Co. A 85° gloss refers to the gloss when the incident angle of light is 85°, a 60° gloss refers to the gloss when the incident angle of light is 60°, and a 20° gloss refers to the gloss when the incident angle of light is 20°.

In the present invention, a "degree of curvature" is an index indicating a degree to which an internal flow path of a negative electrode mixture layer is bent, and is a value defined by Equation (1) below.

$$\text{Equation (1): Degree of curvature } (\tau) = L_e / L_0$$

In Equation (1) above, $L_0$ is the thickness of a negative electrode mixture layer, and $L_e$ is the average travel distance of lithium ions inside the negative electrode mixture layer, wherein the $L_e$ is a value calculated by measuring electrode pore resistance through AC impedance measurement after manufacturing a symmetric cell having a structure of negative electrode/separator/negative electrode.

In the present invention, a "roll-pressing rate" is a value defined by Equation (2) below, and may be calculated by measuring the thickness of a negative electrode mixture layer before and after roll-pressing.

Roll-pressing rate (%) = {(thickness of negative electrode mixture layer before roll-pressing - thickness of negative electrode mixture layer after roll-pressing) / thickness of negative electrode mixture layer before roll-pressing}×100          Equation (2):

In the present invention, "porosity" is a percentage of the volume of pores to the total volume of an electrode mixture layer, and is a value calculated by measuring the actual density of an electrode, dividing the measured actual density by the theoretical density of the electrode, and then multiplying the resultant value by 100.

In order to manufacture a lithium secondary battery having excellent capacity properties, lifespan properties, and rapid charging performance, the present inventors have repeatedly conducted research, and have found that if a negative electrode is manufactured by including a Si-based negative electrode active material, while allowing a 85° gloss of a negative electrode mixture layer to satisfy a specific range after activation, swelling after the activation is low, negative electrode adhesive force is excellent, and damage to the negative electrode active material and to the surface of the negative electrode is minimized, thereby obtaining the above-described objectives, and have completed the present invention.

**Negative electrode**

First, a negative electrode according to the present invention will be described.

The negative electrode according to the present invention includes a negative electrode mixture layer including a Si-based negative electrode active material and a carbon-based negative electrode active material, wherein the surface of the negative electrode mixture layer has a 85° gloss of 14 to 25, preferably 14 to 20, and more preferably 15 to 20, in a fully-discharged state after activation.

The 85° gloss of the surface of the negative electrode mixture layer is a value obtained by quantifying the amount of light specularly reflected when the outermost surface of the negative electrode mixture layer is irradiated with light at an incident angle of 85°, and the fewer the pores on the surface of the negative electrode mixture layer, the higher the value of the 85° gloss, and if the number of pores increase due to damage to the surface or an active material, the value of the 85° gloss decreases. Therefore, the 85° gloss may be used as an index indicating pores and/or damage status of the surface of the negative electrode mixture layer.

According to the research of the present inventors, when the 85° gloss of the outermost surface of the negative electrode mixture layer in a fully-discharged state after an activation process satisfies the above-described range, swelling after the activation is low, negative electrode adhesive force is excellent, a decrease in pores on the surface of the negative electrode due to roll-pressing is small, and pore uniformity is excellent. Specifically, if the 85° gloss of the surface of the negative electrode mixture layer is less than 14 after the activation process, adhesion between a negative electrode current collector and the negative electrode mixture layer is reduced, so that de-lamination of the negative electrode mixture layer or de-intercalation of a negative electrode active material may easily occur during charging and discharging, and accordingly, side reactions with an electrolyte increases and negative electrode deterioration accelerates, thereby degrading lifespan properties. In addition, if the 85° gloss of the surface of the negative electrode mixture layer is greater than 25 after the activation process, the number of pores on the surface of the negative electrode mixture layer is too small, thereby reducing electrolyte mobility, and the degree of curvature of the negative electrode mixture layer increases, thereby reducing lithium mobility, and accordingly, lithium precipitation may occur during rapid charging.

Meanwhile, in the negative electrode, the surface of the negative electrode mixture layer may have a 60° gloss of 0.1 to 4.0, preferably 0.5 to 4.0, and more preferably 1.0 to 4.0, in a fully-discharged state after activation. If the 60° gloss of the surface of the negative electrode satisfies the above-described range, rapid charging performance and negative electrode adhesive force are more excellent.

The gloss of the surface of the negative electrode mixture layer after activation varies according to process conditions, such as the composition of the negative electrode mixture layer, drying conditions during the manufacturing of the negative electrode, and roll-pressing conditions. Therefore, it is possible to manufacture a negative electrode having desired gloss by appropriately adjusting the composition of a negative electrode mixture layer and process conditions of a negative electrode manufacturing process.

Meanwhile, the negative electrode according to the present invention includes a negative electrode mixture layer including a Si-based negative electrode active material and a carbon-based negative electrode active material, wherein the negative electrode mixture layer may further include a negative electrode conductive material and a negative electrode binder in addition to the negative electrode active materials.

The Si-based negative electrode active material may include, for example, one or more selected from the group consisting of a metal silicon (Si), a silicon oxide ($SiO_x$, wherein $0<x<2$), a Si-C composite, and a Si-Y alloy (the Y is an element selected from the group consisting of an alkali metal, an alkaline earth metal, a Group 13 element, a Group 14 element, a transition metal, a rare earth element, and a combination thereof, and is not Si). The element Y may be selected from the group consisting of Mg, Ca, Sr, Ba, Ra, Sc, Y, Ti, Zr, Hf, Rf, V, Nb, Ta, dubnium (Db), Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof. Preferably, the Si-based negative electrode active material may include $SiO_x$ (wherein, $0<x<2$), a Si-C composite, or a combination thereof, and particularly, may preferably be a Si-C composite. The Si-C composite has a small degree of volume expansion during charging and discharging compared to the metal Si, and has excellent capacity properties and electrical conductivity compared to the $SiO_x$. Therefore, if the Si-C composite is used as the Si-based negative electrode active material, it is possible to implement a high capacity while minimizing a change in the volume of the negative electrode.

Preferably, the Si-C composite may have a grain size of 20 nm or less, preferably 1 nm to 20 nm, and more preferably 1 nm to 18 nm. If the grain size of the Si-C composite satisfies the above-described range, an effect of improving cell resistance properties and lifespan properties is excellent.

In addition, the Si-C composite may have a $D_{50}$ of 1 $\mu$m to 15 $\mu$m, preferably 2 $\mu$m to 10 $\mu$m, and more preferably 3 $\mu$m to 10 $\mu$m. In addition, the Si-C composite may have a $D_{10}$ of 5 $\mu$m or less, preferably 1 $\mu$m to 5 $\mu$m, and may have a $D_{90}$ of 6 $\mu$m to 20 $\mu$m, preferably 6 $\mu$m to 15 $\mu$m. If the particle size distribution of the Si-C composite satisfies the above-described range, the electrode density of the negative electrode increases, so that high energy density may be implemented.

Meanwhile, the carbon-based negative electrode active material may be, for example, artificial graphite, natural graphite, graphitized carbon fiber, amorphous carbon, soft carbon, hard carbon, or the like, and preferably, may be artificial graphite, natural graphite, and a combination thereof, and particularly, may preferably be a mixture of artificial graphite and natural graphite.

If the carbon-based negative electrode active material is a mixture of artificial graphite and natural graphite, a weight ratio of the artificial graphite : the natural graphite may be 99 : 1 to 60 : 40, preferably 90 : 10 to 60 : 40, and more preferably 90 : 10 to 70 : 30. If the mixing ratio of the artificial graphite to the natural graphite satisfies the above-described range, both lifespan properties and rapid charging performance are excellent.

In the present invention, the Si-based negative electrode active material and the carbon-based negative electrode active material may be included at a weight ratio of 1 : 99 to 20 : 80, preferably 3 : 97 to 20 : 80, and more preferably 3 : 97 to 15 : 85. If the mixing ratio of the Si-based negative electrode active material and the carbon-based negative electrode active material satisfies the above-described range, both capacity properties and lifespan properties are excellent.

The negative electrode active material may be included in an amount of 80 wt% to 99 wt%, preferably 85 wt% to 99 wt%, and more preferably 90 wt% to 99 wt%, based on the total weight of the negative electrode mixture layer.

Meanwhile, the negative electrode conductive material is used to impart conductivity to the negative electrode, and any conductive material may be used without particular limitation as long as it is used as a conductive material of a lithium secondary battery. Specific examples of the negative electrode conductive material may include a carbon-based material such as carbon black, acetylene black, Ketjen black, channel black, furnace black, lamp black, thermal black, carbon fiber, and a carbon nanotube; metal powder or metal fiber of such as copper, nickel, aluminum, or silver; a conductive whisker such as a zinc oxide whisker and a potassium titanate whisker; a conductive metal oxide such as a titanium oxide; or a conductive polymer such as a polyphenylene derivative, and any one thereof may be used alone or a mixture of two or more thereof may be used. Preferably, carbon black, acetylene black, Ketjen black, channel black, furnace black, lamp black, thermal black, carbon fiber, a carbon nanotube, or a combination thereof may be used as the negative electrode conductive material, and in terms of improving conductivity, it is preferable that a dotted conductive material and a linear conductive material are used together. In this case, the dotted conductive material is a material having a particle shape, thereby having a contact form in the form of a dot with a negative electrode active material, and may be, for example, carbon black, acetylene black, Ketjen black, channel black, furnace black, lamp black, or thermal black, and the linear conductive material is a material having a contact form in the form of a line with a negative electrode active material, and may be, for example, carbon fiber, carbon nanotubes, or the like.

The negative electrode conductive material may be typically included in an amount of 1 wt% to 30 wt%, preferably 1 wt% to 20 wt%, and more preferably 1 wt% to 10 wt%, based on the total weight of a negative electrode mixture layer.

Next, the negative electrode binder serves to improve the bonding among negative electrode active material particles and the adhesion between the negative electrode active material and the negative electrode current collector, and materials used as negative electrode binders of lithium secondary batteries may be used without particular limitation. Specific examples of the negative electrode binder may include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-- butadiene rubber (SBR), fluorine rubber, or various copolymers thereof, and any one thereof may be used alone, or a mixture of two or more thereof may be used.

The negative electrode binder may be included in an amount of 1 wt% to 30 wt%, preferably 1 wt% to 20 wt%, and more preferably 1 wt% to 10 wt%, based on the total weight of the negative electrode mixture layer.

Meanwhile, the negative electrode according to the present invention may have a degree of curvature of 2 or less, preferably 1 to 2, and more preferably 1.2 to 2.0, as defined by Equation (1) below.

$$\text{Equation (1): Degree of curvature } (\tau) = L_e / L_0$$

In Equation (1) above, $L_0$ is the thickness of a negative electrode mixture layer, and $L_e$ is the average travel distance of lithium ions inside the negative electrode mixture layer, wherein the $L_e$ is a value calculated by measuring electrode pore resistance through AC impedance measurement after manufacturing a symmetric cell having a structure of negative electrode/separator/negative electrode.

If the degree of curvature of the negative electrode satisfies the above-described range, lithium mobility inside the negative electrode mixture layer is improved, so that an effect of improving rapid charging performance is more excellent.

The degree of curvature of the negative electrode varies according to process conditions, such as the composition of the negative electrode mixture layer, and roll-pressing conditions. Therefore, it is possible to manufacture a negative electrode having a desired degree of curvature by appropriately adjusting the composition of a negative electrode mixture layer and process conditions of a negative electrode manufacturing process.

In addition, the negative electrode according to the present invention has excellent negative electrode adhesive force of 40 gf/20 mm or greater, preferably 40 gf/20 mm to 70 gf/20 mm, and more preferably 45 gf/20 mm to 70 gf/20 mm, as measured by a 90 degree peel test. If the negative electrode adhesive force satisfies the above-described range, the negative electrode is prevented from being de-intercalated during charging and discharging of a lithium secondary battery, so that excellent lifespan properties may be implemented.

### Method for manufacturing negative electrode

Next, a method for manufacturing a negative electrode according to the present invention will be described.

The method for manufacturing a negative electrode according to the present invention includes the steps of (1) coating a negative electrode slurry including a silicon-based negative electrode active material and a carbon-based negative electrode active material on a negative electrode current collector, (2) roll-pressing a negative electrode coated with the negative electrode slurry such that the surface of a negative electrode mixture layer has a 85° gloss of 14 to 25 after activation, and (3) vacuum-drying the roll-pressed negative electrode to form the negative electrode mixture layer.

Hereinafter, each step of the method for manufacturing a negative electrode according to the present invention will be described in more detail.

### (1) Step of coating negative electrode slurry

First, the negative electrode slurry is applied on a negative electrode current collector, and then dried to be coated.

In this case, as the negative electrode current collector, negative electrode current collectors commonly used in the art may be used, and for example, copper, stainless steel, aluminum, nickel, titanium, fired carbon, or copper or stainless steel that is surface-treated with one of carbon, nickel, titanium, silver, and the like, an aluminum-cadmium alloy, or the like may be used. The negative electrode current collector may typically have a thickness of 3 μm to 500 μm, and as in the case of a positive electrode current collector, microscopic irregularities may be formed on the surface of the negative electrode current collector to improve the binding force of the negative electrode active material. For example, the negative electrode current collector may be used in various forms such as a film, a sheet, a foil, a net, a porous body, a foam, and a non-woven body.

Meanwhile, the negative electrode slurry may be prepared by introducing constituent components of the negative electrode mixture layer according to the present invention, i.e., a negative electrode active material, a negative electrode conductive material, and a negative electrode binder into a solvent and mixing the same, in which case, the negative electrode active material includes a Si-based negative electrode active material and a carbon-based negative electrode active material. The Si-based negative electrode active material, the carbon-based negative electrode active material, the negative electrode conductive material, and the negative electrode binder are the same as those described above, and thus, detailed descriptions thereof will be omitted.

Meanwhile, as the solvent, a solvent for a negative electrode slurry used in the art may be used, and the type of the solvent is not particularly limited. Specific examples of the solvent may include dimethyl sulfoxide (DMSO), isopropyl alcohol, N-methylpyrrolidone (NMP), acetone, water, or a mixture thereof.

The application of the negative electrode slurry may be performed by slurry coating methods known in the art, for example, bar coating, slit coating, spray coating, and the like.

Meanwhile, the drying is for removing the solvent in the negative electrode slurry, and may be performed at 70 °C to 150 °C, preferably 80 °C to 130 °C, and the drying rate may be 5 m/min to 100 m/min, preferably 10 m/min to 90 m/min. If the drying temperature and the drying rate satisfy the above-described ranges, the surface gloss of the negative electrode mixture layer after activation is easily adjusted to the scope of the present invention. Specifically, if the drying temperature is too high or the drying rate is too low, roll-pressing properties are degraded, so that the surface gloss of the negative electrode mixture layer may decrease below a desired range, and if the drying temperature is too low or the drying rate is too fast, the solvent in the negative electrode slurry is not sufficiently removed, and the roll-pressing is excessively performed, so that the surface glossiness of the negative electrode mixture layer may increase above a desired range.

**(2) Step of roll-pressing**

Next, a negative electrode coated with the negative electrode slurry prepared through the process described above is roll-pressed.

In this case, the roll-pressing may be performed such that a roll-pressing rate as defined by Equation (2) below is to be 25% to 40%, preferably 25% to 35%, and more preferably 27% to 35%.

Roll-pressing rate (%) = {(thickness of negative electrode mixture layer before roll-pressing - thickness of negative electrode mixture layer after roll-pressing) / thickness of negative electrode mixture        Equation (2): layer before roll-pressing}×100

If the roll-pressing rate satisfies the above-described range, the surface gloss of the negative electrode mixture layer after activation is formed within the range of the present invention, and negative electrode adhesive force and rapid charging performance are excellent. Specifically, if the roll-pressing rate is less than 25%, the surface gloss of the negative electrode mixture layer after activation is below the range of the present invention, and lifespan properties may be degraded due to reduced adhesion between the negative electrode current collector and the negative electrode mixture layer, and if the roll-pressing rate is greater than 40%, the surface gloss of the negative electrode mixture layer after the activation is above the range of the present invention, and negative electrode swelling increases after the activation, and rapid charging performance may be degraded due to pore reduction on the surface of the negative electrode mixture layer.

Meanwhile, the roll-pressing may be performed such that after the roll-pressing, the negative electrode mixture layer has a porosity of 30% to 40%, preferably 30% to 35%. Typically, roll-pressing is commonly performed such that a negative electrode mixture layer has a porosity of 18% to 30% when manufacturing a negative electrode. However, according to the research of the present inventors, in the case of a negative electrode including a Si-based negative electrode active material, particularly, a Si-C composite, if roll-pressing is performed such that the porosity is 30% or less, surface pores caused by the roll-pressing are reduced, and pore uniformity is low, so that swelling significantly occurs after activation. Therefore, in the present invention, roll-pressing is performed such that the porosity of the negative electrode mixture layer after the roll-pressing is to be 30% or greater, so that swelling may be reduced after activation.

### (3) Step of vacuum-drying

Next, the roll-pressed negative electrode is vacuum-dried to form a negative electrode mixture layer.

The vacuum-drying is for removing moisture remaining in the negative electrode mixture layer, and may be performed at a temperature of 100 °C to 150 °C, preferably 110 °C to 130 °C, for 5 hours to 20 hours, preferably 6 hours to 15 hours.

After the vacuum-drying, the surface of the negative electrode mixture layer may have a 85° gloss of 14 to 20, preferably 14 to 18, and more preferably 14 to 17, and may have a 60° gloss of 1 to 5, preferably 2 to 5, and more preferably 2.5 to 5. In addition, after the vacuum-drying, the surface of the negative electrode mixture layer may have a 20° gloss of 0.2 to 0.7, preferably 0.3 to 0.7, and more preferably 0.4 to 0.7. If the surface gloss of the negative electrode mixture layer after the vacuum-drying satisfies the above-described range, the surface gloss of the negative electrode mixture layer after activation may be formed within the scope of the present invention.

### Lithium secondary battery

Next, a lithium secondary battery according to the present invention will be described.

The lithium secondary battery according to the present invention includes a negative electrode, a positive electrode, and an electrolyte, and may further include a separator if necessary. In this case, the negative electrode is the same as the negative electrode according to the present invention described above, and thus, a detailed description thereof will be omitted, and hereinafter, only the rest of the components excluding the negative electrode will be described.

### Positive electrode

The positive electrode according to the present invention includes a positive electrode mixture layer including a positive electrode active material, a positive electrode conductive material, and a positive electrode binder. The positive electrode may be manufactured by a method in which a positive electrode slurry including the positive electrode active material, the positive electrode binder, the positive electrode conductive material, and a solvent is coated on a positive electrode current collector, and then roll-pressed to form a positive electrode mixture layer.

The positive electrode current collector is not particularly limited as long as it has conductivity without causing a chemical change in the battery, and for example, stainless steel, aluminum, nickel, titanium, fired carbon, or aluminum or stainless steel that is surface-treated with one of carbon, nickel, titanium, silver, and the like may be used.

The positive electrode active material is a compound capable of reversible intercalation and de-intercalation of lithium, and specifically, may include a lithium metal oxide including one or more metals, such as cobalt, manganese, nickel, and aluminum, and lithium. More specifically, the lithium metal oxide may be a lithium-manganese-based oxide (e.g., $LiMnO_2$, $LiMn_2O_4$, etc.), a lithium-cobalt-based oxide (e.g., $LiCoO_2$, etc.), a lithium-nickel-based oxide (e.g., $LiNiO_2$, etc.), a lithium-nickel-manganese-based oxide (e.g., $LiNi_{1-Y}Mn_YO_2$ (wherein 0<Y<1) , $LiMn_{2-Z}Ni_ZO_4$ (wherein 0<Z<2), etc.), a lithium-nickel-cobalt-based oxide (e.g., $LiNi_{1-Y1}Co_{Y1}O_2$ (wherein 0<Y1<1), etc.), a lithium-manganese-cobalt-based oxide (e.g., $LiCo_{1-Y2}Mn_{Y2}O_2$ (wherein 0<Y2<1), $LiMn_{2-Z1}Co_{Z1}O_4$ (wherein 0<Z1<2), etc.), a lithium-nickel-manganese-cobalt-based oxide (e.g., $Li(Ni_pCo_qMn_r)O_2$ (wherein 0<p<1, 0<q<1, 0<r<1, and p+q+r=1) or $Li(Ni_{p1}Co_{q1}Mn_{r1})O_4$ (wherein 0<p1<2, 0<q1<2, 0<r1<2, and p1+q1+r1=2), etc.), or a lithium-nickel-cobalt-transition metal (M) oxide (e.g., $Li(Ni_{p2}Co_{q2}Mn_{r2}M_{s2})O_2$ (wherein M is selected from the group consisting of Al, Fe, V, Cr, Ti, Ta, Mg, and Mo, and p2, q2, r2, and s2 are each an atomic fraction of stand-alone elements, wherein 0<p2<1, 0<q2<1, 0<r2<1, 0<s2<1, and p2+q2+r2+s2=1, etc.) and the like, and any one thereof or a compound of two or more thereof may be included.

Specifically, the positive electrode active material may include a lithium transition metal oxide represented by [Formula 1] below.

$$[\text{Formula 1}] \qquad Li_xNi_aCo_bM^1_cM^2_dO_2$$

In Formula 1 above, the $M^1$ may be one or more selected from Mn and Al, and in terms of durability, may preferably be Mn or a combination of Mn and Al.

The $M^2$ may be one or more selected from the group consisting of Zr, Y, B, W, Mg, Ce, Hf, Ta, La, Ti, Sr, Ba, F, P, and S.

The x represents an atomic fraction of lithium in the lithium transition metal oxide, wherein the x may be $0.90 \leq x \leq 1.1$, preferably $0.95 \leq x \leq 1.08$, and more preferably $1.0 \leq x \leq 1.08$.

The a represents an atomic fraction of nickel among metal elements excluding lithium in the lithium transition metal oxide, wherein the a may be $0.50 \leq a < 1.0$, $0.60 \leq a \leq 0.95$, $0.65 \leq a \leq 0.95$, or $0.80 \leq a \leq 0.95$. If the nickel content satisfies the above-described range, high-capacity properties may be implemented.

The b represents an atomic fraction of cobalt among metal elements excluding lithium in a lithium transition metal oxide, wherein the b may be 0<b<0.5, 0<b<0.4, or 0.01≤b≤0.3.

The c represents an atomic fraction of $M^1$ among metal elements excluding lithium in a lithium transition metal oxide, wherein the c may be 0<c<0.5, 0<c<0.4, or 0.01≤c≤0.3.

The d represents an atomic fraction of $M^2$ among metal elements excluding lithium in a lithium transition metal oxide, wherein the d may be 0≤d≤0.1, or 0≤d≤0.05.

The positive electrode active material may be included in an amount of 60 wt% to 99 wt%, preferably 70 wt% to 99 wt%, and more preferably 80 wt% to 98 wt%, based on the total weight of the positive electrode mixture layer.

The positive electrode binder is a component for assisting in bonding among a positive electrode active material, a positive electrode conductive material, and the like, and in bonding to a current collector.

Examples of the positive electrode binder may include polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene (PE), polypropylene, an ethylene-propylene-diene monomer, a sulfonated ethylene-propylene-diene monomer, styrene-butadiene rubber, fluorine rubber, various copolymers thereof, and the like.

Typically, the positive electrode binder may be included in an amount of 1 wt% to 20 wt%, preferably 1 wt% to 15 wt%, and more preferably 1 wt% to 10 wt%, based on the total weight of a positive electrode mixture layer.

The positive electrode conductive material is a component for further improving the conductivity of a positive electrode active material, and the conductive material is not particularly limited as long as it has conductivity without causing a chemical change in the battery, and for example, carbon powder such as carbon black, acetylene black, Ketjen black, channel black, furnace black, lamp black, or thermal black; graphite powder such as natural graphite, artificial graphite, or graphite with a highly developed crystal structure, conductive fiber such as carbon fiber or metal fiber; fluorocarbon powder; conductive powder such as aluminum powder or nickel powder; conductive whisker such as zinc oxide or potassium titanate; conductive metal oxide such as titanium oxide; a conductive material such as polyphenylene derivative, or the like may be used.

Typically, the positive electrode conductive material may be included in an amount of 1 wt% to 20 wt%, preferably 1 wt% to 15 wt%, and more preferably 1 wt% to 10 wt%, based on the total weight of a positive electrode mixture layer.

The solvent for a positive electrode slurry may include an organic solvent such as dimethyl sulfoxide (DMSO), isopropyl alcohol, N-methylpyrrolidone (NMP), acetone, or the like, and may be used in an amount such that a preferred viscosity is achieved when the positive electrode active material, the positive electrode binder, the positive electrode conductive material, and the like are included. For example, the solvent may be included in an amount such that the concentration of a solid including the positive electrode active material, and optionally, the positive electrode binder and the positive electrode conductive material is to be 50 wt% to 95 wt%, preferably 70 wt% to 95 wt%, and more preferably 70 wt% to 90 wt%.

## Electrolyte

As the electrolyte used in the present invention, various electrolytes usable in a lithium secondary battery may be used, such as an organic liquid electrolyte, an inorganic liquid electrolyte, a solid polymer electrolyte, a gel-type polymer electrolyte, a solid inorganic electrolyte, and a molten-type inorganic electrolyte, but the type thereof is not particularly limited.

Specifically, the electrolyte may include an organic solvent and a lithium salt.

Any organic solvent may be used as the organic solvent without particular limitation as long as it may serve as a medium through which ions involved in an electrochemical reaction of a battery may move. Specifically, as the organic solvent, an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methylethyl carbonate (MEC), ethylmethyl carbonate (EMC), ethylene carbonate (EC), or propylene carbonate (PC); an alcohol-based solvent such as ethyl alcohol or isopropyl alcohol; nitriles such as R-CN (wherein R is a linear, branched, or cyclic C2 to C20 hydrocarbon group, and may include a double-bond aromatic ring or ether bond); amides such as dimethylformamide; dioxolanes such as 1,3-dioxolane; or sulfolanes may be used. Among these, the carbonate-based solvent is preferred, and a mixture of a cyclic carbonate (e.g., ethylene carbonate or propylene carbonate) having high ion conductivity and a high dielectric constant, which may increase charge/discharge performance of the battery, and a low-viscosity linear carbonate-based compound (e.g., ethylmethyl carbonate, dimethyl carbonate, diethyl carbonate, or the like) is more preferred.

As the lithium salt, any compound may be used without particular limitation as long as it can provide lithium ions used in a lithium secondary battery. Specifically, as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or a combination thereof, or like may be used. The lithium salt may be used in a concentration range of 0.1 to 5.0 M, preferably 0.1 M to 3.0 M. If the concentration of the lithium salt is included in the above-described range, the electrolyte has suitable conductivity and viscosity, and thus, may exhibit excellent electrolyte performance, and lithium ions may effectively move.

Meanwhile, for purposes of improving the lifespan properties of a battery, suppressing the reduction in battery capacity, improving the discharge capacity of the battery, and the like, the electrolyte may additionally include an additive in addition to the above electrolyte components. For example, the electrolyte may include at least one additive selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound.

An example of the cyclic carbonate-based compound may be vinylene carbonate (VC) or vinylethylene carbonate.

An example of the halogen-substituted carbonate-based compound may be fluoroethylene carbonate (FEC).

An example of the sultone-based compound may be at least one compound selected from the group consisting of 1,3-propane sultone (PS), 1,4-butane sultone, ethene sultone, 1,3-propene sultone (PRS), 1,4-butene sultone, and 1-methyl-1,3-propene sultone.

An example of the sulfate-based compound may be ethylene sulfate (Esa), trimethylene sulfate (TMS), or methyl trimethylene sulfate (MTMS).

An example of the phosphate-based compound may be one or more compounds selected from the group consisting of lithium difluoro(bisoxalato)phosphate, lithium difluorophosphate, tetramethyl trimethyl silyl phosphate, trimethyl silyl phosphite, tris(2,2,2-trifluoroethyl)phosphate, and tris(trifluoroethyl)phosphite.

An example of the borate-based compound may be tetraphenylborate, lithium oxalyldifluoroborate (LiODFB), and lithium bisoxalatoborate ($LiB(C_2O_4)_2$, LiBOB).

An example of the nitrile-based compound may be at least one compound selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

An example of the benzene-based compound may be fluorobenzene, an example of the amine-based compound may be triethanolamine, ethylenediamine, or the like, and an example of the silane-based compound may be tetravinylsilane.

The lithium salt-based compound is a compound different from the lithium salt included in the non-aqueous electrolyte, and may be lithium difluorophosphate (LiDFP), $LiPO_2F_2$, $LiBF_4$, or the like.

The additive may be included in an amount of 0.1 wt% to 10 wt%, preferably 0.1 wt% to 5 wt%, based on the total weight of the electrolyte.

**Separator**

The separator is to separate the negative electrode and the positive electrode and to provide a movement path for lithium ions, and any separator may be used without particular limitation as long as it is a separator typically used in a lithium secondary battery. Specifically, as the separator, a porous polymer film, for example, a porous polymer film manufactured using a polyolefinic polymer such as an ethylene homopolymer, a propylene homopolymer, an ethylene/butene copolymer, an ethylene/hexene copolymer, and an ethylene/methacrylate copolymer, or a stacked structural body having two or more layers thereof may be used. In addition, a typical porous non-woven fabric, for example, a non-woven fabric made of glass fiber having a high melting point, polyethylene terephthalate fiber, or the like may be used. Also, a coated separator including a ceramic component or a polymer material may be used to secure heat resistance or mechanical strength.

The lithium secondary battery according to the present invention as described above may be used for manufacturing a battery pack. The battery pack includes an assembly to which the lithium secondary battery according to the present invention is electrically connected, and a pack housing accommodating the assembly, and the pack housing may include a bus bar, a cooling unit, an external terminal, and the like for electrical connection of the lithium secondary batteries. The battery pack may be mounted on a motor vehicle. The motor vehicle may be, as an example, an electric vehicle, a hybrid vehicle, or a plug-in hybrid vehicle. The motor vehicle includes a four-wheeled motor vehicle or two-wheeled motor vehicle. Particularly, the lithium secondary battery according to the present invention has high energy density, and excellent rapid charging performance, and thus, may be usefully used as a battery for electric vehicles.

Hereinafter, the present invention will be described in more detail with reference to specific examples. However, the following examples are merely illustrative of the present invention, and the scope of the present invention is not limited to these examples.

**Example 1**

A negative electrode active material : a negative electrode conductive material : a negative electrode binder were introduced at a weight ratio of 97 : 1 : 2 into distilled water to prepare a negative electrode slurry.

In this case, as the negative electrode active material, a Si-C composite : artificial graphite : natural graphite were mixed at a weight ratio of 5 : 76 : 19 and used, and as the negative electrode conductive material, carbon black : single-walled carbon nanotubes were mixed at a weight ratio of 97 : 3 and used.

In addition, as the negative electrode binder, styrene-butadiene rubber (SBR) : carboxymethyl cellulose (CMC) were mixed at a weight ratio of 60 : 40 and used.

The negative electrode slurry was applied on a copper current collector, dried under the conditions of a drying temperature of 120 °C and a drying rate of 10 m/min, roll-pressed at a roll-pressing rate of 27%, and then vacuum-dried to manufacture a negative electrode.

**Example 2**

A negative electrode was manufactured in the same manner as in Example 1, except that roll-pressing was performed at a roll-pressing rate of 35%.

**Example 3**

A negative electrode was manufactured in the same manner as in Example 1, except that the negative electrode slurry was applied on a copper current collector, and then dried under the conditions of a drying temperature of 130 °C and a drying rate of 40 m/min.

**Example 4**

A negative electrode was manufactured in the same manner as in Example 1, except that when preparing a negative electrode slurry, a Si-C composite : artificial graphite : natural graphite were mixed at a weight ratio of 10 : 70 : 20 and used as a negative electrode active material.

**Comparative Example 1**

A negative electrode was manufactured in the same manner as in Example 1, except that roll-pressing was performed at a roll-pressing rate of 45%.

**Comparative Example 2**

A negative electrode was manufactured in the same manner as in Example 1, except that roll-pressing was performed at a roll-pressing rate of 20%.

**Comparative Example 3**

A negative electrode was manufactured in the same manner as in Example 1, except that roll-pressing and vacuum-drying were not performed.

**Comparative Example 4**

A negative electrode was manufactured in the same manner as in Example 1, except that the negative electrode slurry was applied on a copper current collector, and then dried under the conditions of a drying temperature of 90 °C and a drying rate of 70 m/min.

**Comparative Example 5**

A negative electrode was manufactured in the same manner as in Example 1, except that when preparing a negative electrode slurry, artificial graphite : natural graphite were mixed at a weight ratio of 80 : 20 and used as a negative electrode active material.

**Experimental Example 1: Measurement of gloss and degree of curvature of negative electrode after V/D**

The surface gloss and the degree of curvature of the negative electrode mixture layer of the negative electrode manufactured in each of Examples and Comparative Examples were measured by the following methods.

(1) Gloss (unit: GU): measured by the ISO2813 method by using Micro-Tri-Gloss(AG4563) of BYK Co.

(2) Degree of curvature ($\tau$): A separator was interposed between two negative electrodes and assembled to manufacture an electrode assembly, and the electrode assembly was placed in a battery case, and then an electrolyte (ethylene carbonate : ethylmethyl carbonate = 3 : 7 v/v%) not containing a lithium salt was injected into the case, and aged for 12 hours to 24 hours to manufacture a symmetric cell. Thereafter, the manufactured symmetric cell was applied with a current of 0.1 Hz to 1000000 Hz and 10 Mv, and electrode pore resistance was measured using a graph measured by Electrochemical Impedance Spectroscopy (EIS) to calculate an average travel distance $L_e$ of lithium ions inside the negative electrode mixture layer, which was divided by a thickness $L_0$ of the negative electrode mixture layer to calculate a degree of curvature. The measurement results are shown in [Table 1] below.

[Table 1]

| | Gloss of negative electrode | | | Degree of curvature of negative electrode |
| --- | --- | --- | --- | --- |
| | 20° | 60° | 85° | |
| Example 1 | 0.5 | 3.8 | 14.7 | 1.3 |
| Example 2 | 0.6 | 4.0 | 16 | 1.5 |
| Example 3 | 0.6 | 4.1 | 16.2 | 1.5 |
| Example 4 | 0.7 | 4.5 | 17.1 | 1.7 |
| Comparative Example 1 | 0.8 | 5.6 | 21.1 | 2.6 |
| Comparative Example 2 | 0.3 | 2.2 | 12 | 1.2 |
| Comparative Example 3 | 0.1 | 0.6 | 2.2 | Not measurable |
| Comparative Example 4 | 0.3 | 2.1 | 19.3 | 1.2 |
| Comparative Example 5 | 2.8 | 11.1 | 49.0 | 2.58 |

**Experimental Example 2: Measurement of negative electrode gloss after activation**

A positive electrode active material : a conductive material : a binder were introduced at a weight ratio of 97 : 1 : 2 into N-methylpyrrolidone to prepare a positive electrode slurry.

In this case, a lithium nickel-cobalt-manganese oxide was used as the positive electrode active material, carbon black was used as the positive electrode conductive material, and polyvinylidene fluoride (PVdF) was used as the positive electrode binder.

The positive electrode slurry was coated on an aluminum current collector, dried at a drying temperature of 110 °C and a drying rate of 10 m/min, roll-pressed at a roll-pressing rate of 30%, and then vacuum-dried to manufacture a positive electrode.

A separator was interposed between the positive electrode manufactured as described above and each of the negative electrodes manufactured in Examples and Comparative Examples to manufacture an electrode assembly, and the electrode assembly was placed in a battery case, and then an electrolyte solution was injected into the case to manufacture a lithium secondary battery cell.

The lithium secondary battery cell was aged at 25 °C for 360 minutes, charged to 4.45 V with 0.1 C, and then aged at 40 °C to perform an activation process.

The lithium secondary battery cell subjected to the activation process was discharged up to SOC 0, and then decomposed to separate the negative electrode, and the gloss of the surface of the negative electrode mixture layer and the negative electrode adhesive force were measured by the following methods.

(1) Gloss (unit: GU): measured by the ISO2813 method by using Micro-Tri-Gloss (AG4563) of BYK Co.

(2) Negative electrode adhesive force (unit gf/20 mm): Using a universal tensile testing machine (UTM), the negative electrode mixture layer was pulled at a peel angle of 90 degrees and a peel rate of 100 mm/min to measure force required until the negative electrode mixture layer and the negative electrode current collector were peeled.

The measurement results are shown in [Table 2] below.

[Table 2]

| | Negative electrode gloss after activation | | | Negative electrode adhesive force [g/20mm] |
|---|---|---|---|---|
| | 20° | 60° | 85° | |
| Example 1 | 0.3 | 2.0 | 16.7 | 55 |
| Example 2 | 0.6 | 3.5 | 18.3 | 63 |
| Example 3 | 0.6 | 3.4 | 19.1 | 50 |
| Example 4 | 0.6 | 3.1 | 17.3 | 45 |
| Comparative Example 1 | 0.4 | 3.4 | 26.6 | 69 |
| Comparative Example 2 | 0.3 | 1.9 | 12.5 | 35 |
| Comparative Example 3 | Not measura ble | Not measura ble | Not measura ble | 5 |
| Comparative Example 4 | 0.3 | 1.8 | 12 | 10 |
| Comparative Example 5 | 1.1 | 6.1 | 49.2 | 22 |

From Table 2 above, it can be confirmed that the negative electrode of each of Examples 1 to 4, in which the 85° gloss of the surface of the negative electrode satisfies 14 to 25 in the fully-discharged state after the activation, has high negative electrode adhesive force of 45 gf/20 mm or greater.

On the other hand, the negative electrode of each of Comparative Examples 2 to 4, in which the 85° gloss of the surface of the negative electrode was less than 14 in the fully-discharged state after the activation, had low negative electrode adhesive force of less than 45 gf/20 mm. Meanwhile, the negative electrode of Comparative Example 1, in which the 85° gloss of the surface of the negative electrode was greater than 25 in the fully-discharged state after the activation, had excellent adhesive force, but as to be described later, had significantly reduced rapid charging performance.

In addition, the negative electrode of Comparative Example 5 using only the carbon-based negative electrode active material without using a Si-based negative electrode active material, the 85° gloss of the surface of the negative electrode was greater than 25 in the fully-discharged state after the activation, and the negative adhesive force was as low as 22 gf/20 mm.

**Experimental Example 3: Evaluation of rapid charging performance**

A separator was interposed between the negative electrode manufactured by each of Examples 1 to 4 and Comparative Examples 1, 2, 4, and 5 and a lithium counter electrode to manufacture an electrode assembly, and the electrode assembly was placed in a battery case, followed by injecting an electrolyte into the case to manufacture a coin-half cell.

The coin half-cell was charged with 3.0 C and in a CC mode to obtain a charge profile according to SOC, and in the corresponding charging profile, an inflection point was evaluated as a point of time at which lithium precipitation occurred. The evaluation results are shown in FIG. 1.

As shown in FIG. 1, in the case of the batteries to which the negative electrodes of Examples 1 to 4 were respectively applied, lithium plating occurred at SOC 40 or above, whereas in the case of the batteries to which the negative electrodes of Comparative Examples 1, 4 and 5 were respectively applied, lithium plating occurred in the SOC range of 20 to 30, so that it was confirmed that rapid charging performance was poor due to the occurrence of lithium plating.

**Claims**

1.   A negative electrode comprising a negative electrode mixture layer including a Si-based negative electrode active material and a carbon-based negative electrode active material, wherein the surface of the negative electrode mixture layer has a 85° gloss of 14 to 25 in a fully-discharged state after activation.

2.   The negative electrode of claim 1, wherein:

the Si-based negative electrode active material comprises $SiO_x$ (wherein, 0<x<2), a Si-C composite, or a combination thereof; and
the carbon-based negative electrode active material comprises artificial graphite, natural graphite, or a combination thereof.

3. The negative electrode of claim 1, wherein:

the Si-based negative electrode active material is a SiC composite; and
the carbon-based negative electrode active material is a mixture of artificial graphite and natural graphite.

4. The negative electrode of claim 1, wherein the Si-based negative electrode active material and the carbon-based negative electrode active material are included at a weight ratio of 1 : 99 to 20 : 80.

5. The negative electrode of claim 1, wherein in the negative electrode, the surface of the negative electrode mixture layer has a 60° gloss of 0.1 to 4.0 in a fully-discharged state after activation.

6. The negative electrode of claim 1, wherein a degree of curvature as defined by Equation (1) below is 2 or less:

$$\text{Equation (1): Degree of curvature } (\tau) = L_e / L_0$$

wherein in Equation (1) above, $L_0$ is the thickness of the negative electrode mixture layer, and $L_e$ is the average travel distance of lithium ions inside the negative electrode mixture layer.

7. The negative electrode of claim 1, wherein the negative electrode has negative electrode adhesive force of 40 gf/20 mm or greater as measured by a 90 degree peel test.

8. A method for manufacturing a negative electrode, the method comprising:

coating a negative electrode slurry including a silicon-based negative electrode active material and a carbon-based negative electrode active material on a negative electrode current collector;
roll-pressing a negative electrode coated with the negative electrode slurry such that the surface of a negative electrode mixture layer has a 85° gloss of 14 to 25 in a fully-discharged state after activation; and
vacuum-drying the roll-pressed negative electrode to form the negative electrode mixture layer.

9. The method of claim 8, wherein the roll-pressing is performed such that a roll-pressing rate as defined by Equation (2) below is 25% to 40%:

Roll-pressing rate (%) = { (thickness of negative electrode mixture layer before roll-pressing - thickness of negative electrode mixture layer after roll-pressing) / thickness of negative electrode     Equation (2): mixture layer before roll-pressing}×100

10. The method of claim 8, wherein the roll-pressing is performed such that the negative electrode mixture layer has a porosity of 30% to 40%.

11. The method of claim 8, wherein after the vacuum-drying, the surface of the negative electrode mixture layer has a 85° gloss of 14 to 20.

12. The method of claim 8, wherein after the vacuum-drying, the surface of the negative electrode has a 60° gloss of 1 to 5.

13. A lithium secondary battery comprising the negative electrode according to any one of claims 1 to 7, a positive electrode, and an electrolyte.

FIG.1

## INTERNATIONAL SEARCH REPORT

| | International application No. |
|---|---|
| | **PCT/KR2024/020851** |

**A. CLASSIFICATION OF SUBJECT MATTER**

**H01M 4/134**(2010.01)i; **H01M 4/133**(2010.01)i; **H01M 4/36**(2006.01)i; **H01M 4/587**(2010.01)i; **H01M 4/583**(2010.01)i; **H01M 4/1395**(2010.01)i; **H01M 4/1393**(2010.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/134(2010.01); H01M 10/052(2010.01); H01M 10/0525(2010.01); H01M 10/0569(2010.01); H01M 4/13(2010.01); H01M 4/38(2006.01); H01M 4/48(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), Google & keywords: 음극(anode), 리튬이차전지(lithium secondary cell), 실리콘(silicon), 탄소(carbon), 음극 활물질(anode active material), 광택도(gloss)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2021-0039816 A (LG CHEM, LTD.) 12 April 2021 (2021-04-12) See claims 1 and 10-13; and paragraphs [0132]-[0137], [0139]-[0144], [0176] and [0177]. | 1-7,13 |
| A | | 8-12 |
| Y | KR 10-2023-0067005 A (LG ENERGY SOLUTION, LTD.) 16 May 2023 (2023-05-16) See claims 1-13; and paragraphs [0042], [0060] and [0071]. | 1-7,13 |
| Y | KR 10-2019-0066867 A (LG CHEM, LTD.) 14 June 2019 (2019-06-14) See claims 1-9; and paragraphs [0103]-[0106]. | 1-7,13 |
| Y | KR 10-2021-0007273 A (SAMSUNG SDI CO., LTD.) 20 January 2021 (2021-01-20) See claims 1-20; and paragraphs [0120]-[0129]. | 1-7,13 |
| A | JP 2008-277231 A (HITACHI CHEM. CO., LTD.) 13 November 2008 (2008-11-13) See claims 1-13; and paragraphs [0034] and [0066]-[0070]. | 1-13 |

☐ Further documents are listed in the continuation of Box C.　　☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **28 March 2025** | **28 March 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

International application No.

**PCT/KR2024/020851**

| Patent document cited in search report | | | Publication date (day/month/year) | Patent family member(s) | | | Publication date (day/month/year) |
|---|---|---|---|---|---|---|---|
| KR | 10-2021-0039816 | A | 12 April 2021 | CN | 114051665 | A | 15 February 2022 |
| | | | | CN | 114051665 | B | 23 January 2024 |
| | | | | EP | 3979386 | A1 | 06 April 2022 |
| | | | | EP | 3979386 | A4 | 14 September 2022 |
| | | | | KR | 10-2782233 | B1 | 17 March 2025 |
| | | | | US | 2022-0263113 | A1 | 18 August 2022 |
| | | | | WO | 2021-066462 | A1 | 08 April 2021 |
| KR | 10-2023-0067005 | A | 16 May 2023 | None | | | |
| KR | 10-2019-0066867 | A | 14 June 2019 | None | | | |
| KR | 10-2021-0007273 | A | 20 January 2021 | US | 2021-0013493 | A1 | 14 January 2021 |
| JP | 2008-277231 | A | 13 November 2008 | None | | | |

Form PCT/ISA/210 (patent family annex) (July 2022)

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230190455